# EUROPEAN PATENT APPLICATION

(11) **EP 4 311 429 A1**
(43) Date of publication of application: **31.01.2024**
(21) Application number: 22187059.5
(22) Date of filing: 26.07.2022
(51) Int. Cl.: A01G 18/62, A01G 18/65, A01G 18/70

(54) **MUSHROOM CULTIVATION AND HARVESTING CONTAINER SYSTEM**

(71) Applicant: Tupu Farming Solutions GmbH, 10119 Berlin (DE)
(72) Inventor: ARNON, Eldad, 10119 Berlin (DE); HESHOF, Ruud, 10119 Berlin (DE); LOCK, Daniel, 10119 Berlin (DE)
(74) Representative: Ridderbusch, Oliver

(57) **Abstract**

The present invention relates to a mushroom (M) cultivation and harvesting container system (1) for fungi, focusing on edible mushrooms (M). The container system (1) comprises a number (N3) of at least one and preferably two to six pods (3) which are arranged subsequently adjacent to each other in a first direction (X) of a frame (21) provided by a case board (2). By this arrangement of the pods (3) in-between ventilation ducts are provided for heat exchange by air circulation. On top of the case board (2) a cutting lid (4) is slidably arranged that functions as a harvesting tool by cutting mushroom fruiting bodies (M) at the top of the lid (4) by sliding the cutting lid (4) over the pods (3) and the frame (21) of the case board (2). The cutting lid (4) can comprise one or more cutting holes (40), depending on the type of fungus that is grown in the pod (3). The case board (2) comprises on two opposite sides of which a first docking side (211) and second docking side (212) for supporting the arrangement of the case board (2) in a rack (6) and/or for automatic transportation of the assembled container system (1) comprising the pods (3) arranged in the frame (21) of the case board (2) and the cutting lid (4). The assembled container system (1) can be tilted so that the opening (30) of the pods (3) together with the cutting holes (40) of the cutting lid (4) which represent the opening (10) of the container system (1) is either vertically oriented or horizontally oriented for the growth of different fungi.

## Description

### FIELD OF THE INVENTION

The present invention relates to the field of agriculture, particularly to the cultivation of fungi in a vertical farming system. More particularly the invention is directed at a mushroom cultivation and harvesting container system for the cultivation and harvesting of various fungi in an automated manner.

### BACKGROUND OF THE INVENTION

The increasing population intensifies the food industry and new food production systems are required to fulfill the future demand in food production. Also, the transition of the food market towards alternative protein sources requires solutions in the way of growing and processing procedures. The cultivation of mushrooms represents an excellent alternative as a high nutritional source of food. The upcoming markets in mushroom demand confirm the trend of this food as an alternative to the dietary needs of society.

Mushrooms act as nutritional food, since they are low in calories, sodium-free, fat-free, and cholesterol-free. Furthermore, mushrooms are full of micronutrients like vitamins and beneficial minerals. Due to this nutritional value mushrooms have health benefits like lowering blood pressure, act positively in the energy system by maintaining a correct electrolyte balance, and help break down fats, carbohydrates and proteins.

Mushrooms can grow on a variety of organic material, called substrate. The substrate needs to be balanced depending on the type of mushroom to be cultivated. In general, this material consists of lignin and cellulose-like material. These kind of components are mainly found in plant-like material. Fungi are ideal organisms that can degrade and consume this kind of organic material into biomass. This biomass is called mycelium and can develop fruiting bodies when the conditions are appropriate. These fungal fruiting bodies are known as mushrooms of which some of them are edible.

Therefore attempts have already been made to provide methods and devices for the industrial cultivation and harvesting of mushrooms.

For example the prior art document EP 3 616 501 A1 proposes a cap for a cultivation bottle for brown beech mushrooms which includes a cylindrical member that is fitted onto a wide-mouth part of a cultivation bottle. The cylindrical member includes a large-diameter cylindrical part that covers and is fitted to an end edge of the wide mouth part and an outer surface in a vicinity of the end edge, a small-diameter cylindrical part that has a first opening with a smaller diameter than the large-diameter cylindrical part, and that is positioned toward a center of the large-diameter cylindrical part, and a connecting part that connects an outer peripheral edge of the large-diameter cylindrical part with the small-diameter cylindrical part.

Moreover the prior art EP 3 616 501 A1 suggests a plurality of methods for harvesting the mushrooms which, however, have in common that the proposed harvesting is disadvantageously performed by pulling the brown beech mushroom out from the cylindrical member after the growing process is complete, and the hard tip part of the harvested brown beech mushroom is cut off at a midsection location, since there is a considerable risk that the mushrooms will be damaged and spoiled by the suggested harvesting methods.

### SUMMARY OF THE INVENTION

It is therefore an object of the invention to provide a mushroom cultivation and harvesting container system for the growth of fungi, which effectively allows high quality cultivation and harvesting of mushrooms also in mass production by manual and/or automated operation of machinery particularly in a vertical farming system.

In order to fulfill the new food demands, an innovative agricultural mushroom cultivation and harvesting system for fungal growth is proposed. The invention is particularly adapted for the use in vertical farming for fungi to exploit space in the mushroom farm in a more efficient manner, thus increasing the yield per square meter. By the use of a stackable cultivation and harvesting container system fungi can be efficiently grown and harvested.

According to a preferred embodiment of the invention the mushroom cultivation and harvesting container system comprises a case board being adapted to be stored in a stackable manner and operated in a rack particularly of a vertical farming system. For this purpose the case board of the container system comprises at least one flat panel extending in a first and second direction of the case board and providing a frame for at least one pod being adapted for accommodating substrate with fungi, nutrients and humidity appropriate for the cultivation of mushrooms.

The mushroom cultivation and harvesting container system further comprises at least one flat cutting lid which extends in parallel to the panel of the case board and which is slidably arranged above an opening of the pod for cutting and harvesting mushroom fruit bodies growing through the opening at their stem, respectively.

Preferably the panel of the case board comprises at least one hole in its panel, thus providing the frame for accommodating the pod. The hole is further preferably adapted to provide a seat for the at least one pod having a cylindrical body, wherein the seat corresponds to a rim circumferentially arranged adjacent to the opening of the pod. The dimension of the body and the rim of the pod correspond to the dimension of the hole and the seat in the frame, respectively, such that the pod can be removably inserted into the frame, whereby the inserted pod is accommodated in the seat.

The mushroom cultivation and harvesting container system comprising the above advantageous features can be easily and efficiently assembled, disassembled and reassembled, particularly also for cleaning and sterilization purposes and setup purposes, such as the provision of substrate with fungi, nutrients and humidity appropriate for the cultivation of mushrooms

According to a preferred embodiment the container system comprises a number of two to ten pods and preferably of two to six pods, the number of which corresponds with the number of holes in the frame of the case board, whereby the holes are adjacently and subsequently arranged in at least one row extending in the first direction, such that a maximum surface area of the pods is available for heat exchange and air flow.

The diameter of the opening and the height of the cylindrical pod are preferably selected, respectively, such that the diameter corresponds approximately to the height of the pod, and the inner volume of the pod amounts to about 0.5 to 1.5 liter and preferably to about 1.0 liter. In this connection it is to be noted that a larger volume of the pod is preferably used for the cultivation and harvesting of bigger mushrooms.

The cutting lid is preferably slidably arranged in two guide rails which extend into the second direction and which are arranged in parallel on the flat panel of the case board and on opposite sides of which with respect to the first direction. The dimension of the cutting lid conveniently corresponds to the dimension of the frame, such that when the cutting lid is completely inserted into the guide rails the upper surface of the panel is completely covered by the cutting lid.

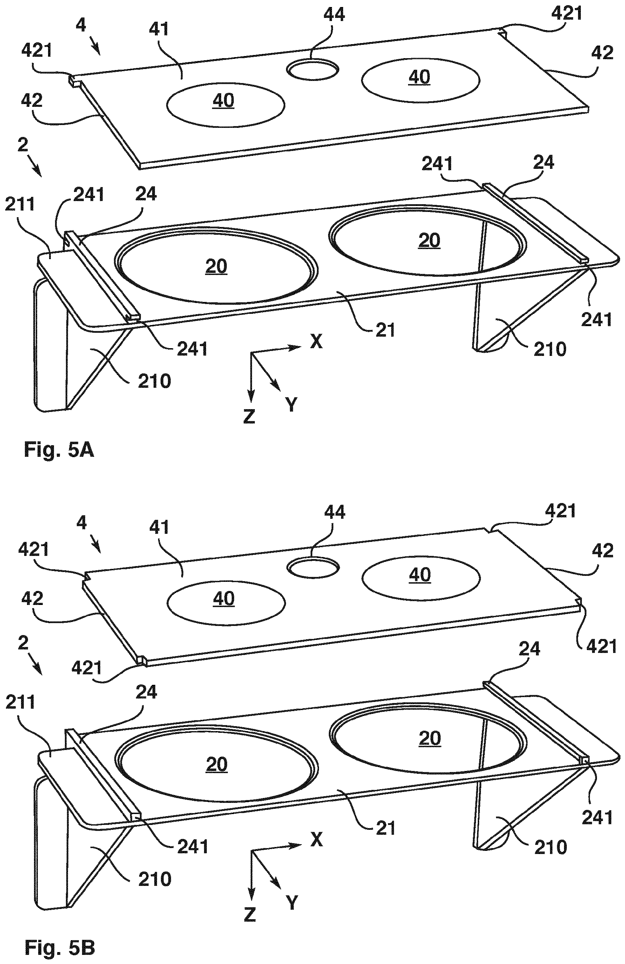

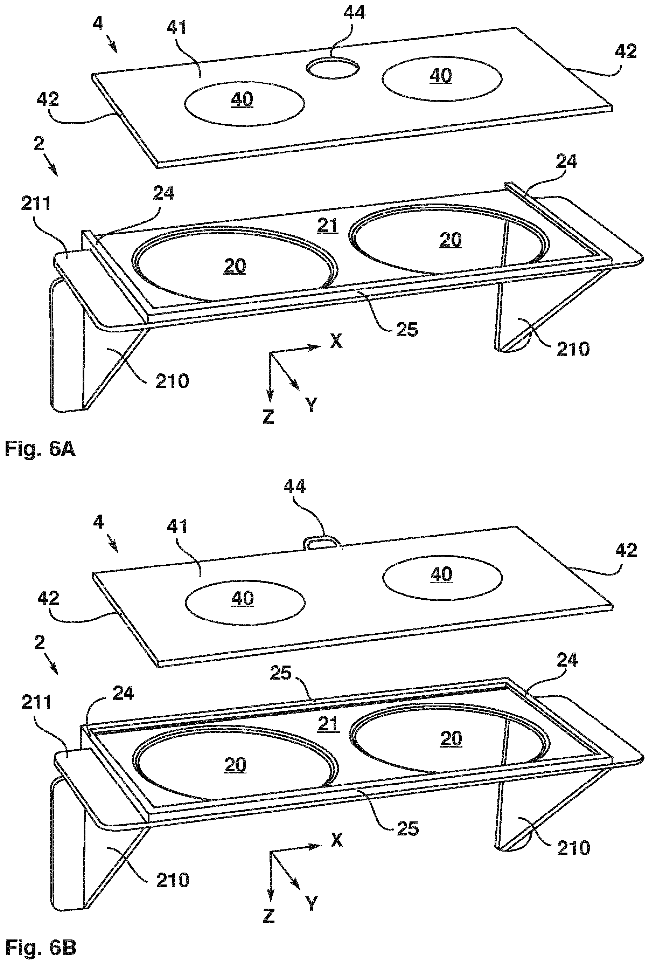

To limit the movement and positioning of the cutting lid in the second direction the container system can comprise at least one mechanical stopper. The mechanical stopper is particularly of advantage for preventing the cutting lid from unintentionally lapsing its correct position on the flat panel, particularly when the container system is tilted or rotated. Accordingly the mechanical stopper is further particularly of advantage for the herein after described arrangement of the container system which provides the horizontal growth direction. Preferred embodiments of the container system comprising the at least one mechanical stopper are moreover described in detail herein after particularly with reference to Fig. 5A, 5B, 6A and 6B.

The cutting lid comprises at least one hole providing a sharp edge which is adapted to cut the stem of mushroom fruit bodies growing and extending from the opening of the pod through the hole of the cutting lid substantially perpendicular to their growth direction, whereby the hole is conveniently arranged above the opening.

Preferably the hole of the cutting lid is smaller than the opening of the pod, whereby the cutting lid is arranged to cut the fungi adjacent to the opening of the pod by pulling the cutting lid in the second direction out of the guide rails and away from the pod. For proper and efficient operation the cutting lid comprises at least one operating element for manual or machine operation of the cutting lid.

The mushroom cultivation and harvesting system preferably comprises a plurality of interchangeable cutting lids which vary in the number (amount) and/or dimension and/or shape of their cutting holes, thereby providing different cutting lids for different fruiting body growth of the fungus in the pod. Thus the mushroom cultivation and harvesting system can be easily and effectively used for also seasonally preferred different fruiting body growth of the fungus.

The case board of the harvesting and cultivation system preferably comprises at least a first docking side and at least a second docking side on each opposite side of the case board in the first direction for providing a support of the case board in the rack of a preferably vertical farming system and/or for leverage by machinery in either a horizontal or a vertical growth direction.

For this preferred technical function the first docking side effectively extends essentially in the second direction, and the second docking side effectively extends essentially in the third direction.

When the first docking side which extends in the second direction is horizontally arranged, as a consequence the second docking side which extends in the third direction is vertically arranged. In this arrangement the case board provides the vertical growth direction.

When the first docking side which extends in the second direction is vertically arranged, as a consequence the second docking side which extends in the third direction is horizontally arranged. In this arrangement the case board provides the horizontal growth direction.

As described above the cultivation and harvesting container system comprising the above features is advantageously adapted for the use of vertical and or horizontal growth, whereby moreover the above described cutting lid, which is slidably arranged in the second direction, in each case is advantageously adapted to cut the mushroom substantially perpendicular to their growth direction.

The above described first and second docking sides are effectively arranged on a side panel extending in the second and third direction on each opposite side of the case board in the first direction. Preferably a predetermined pitch is provided between the first and second docking side, such that the first and second docking side being spaced apart for convenient and proper machine and/or robot arm operation and/or seat on a support provided at a frame of an above mentioned rack.

According to a further embodiment of the mushroom cultivation and harvesting container system, the container system further comprises a closing cover which is designed to be placed over the cutting lid such that sterility of the substrate inside the pod during transport and mycelium growth is maintained.

For providing the above technical function the cover comprises an inner side and two opposite first side frames which extend into the first direction and two opposite second side frames which extend into the second direction. The cover is adapted to correspond with the frame and the first and second guide rail such that the cover can preferably be attached in a form-locked and/or force-locked manner on the cutting lid and/or the frame and/or the first and second guide rail. Preferably the corresponding formation of the cover and the frame and the first and second guide rail of the case board is designed such that the attachment of the cover can withstand a tensile force of about 10 to 30 Newton and more preferably of about 20 Newton, particularly for providing a securely attached lower cover for the container system according to the herein after described embodiment, which is adapted to be rotated 180°.

The cover can preferably be designed such that in the closed position of the cover, the inner side of the cover together with the opening of the pod and the hole of the cutting lid can be hermetically sealed, whereby when the cover is open, the fruiting phase of fungus can be induced. More preferably the cover can be designed such that in the closed position of the cover gasses can freely move through the cover into the inner side of the cover and into the opening of the pod, but microorganisms cannot, such that even when the cover is in its closed position, the fruiting phase of fungus can be induced.

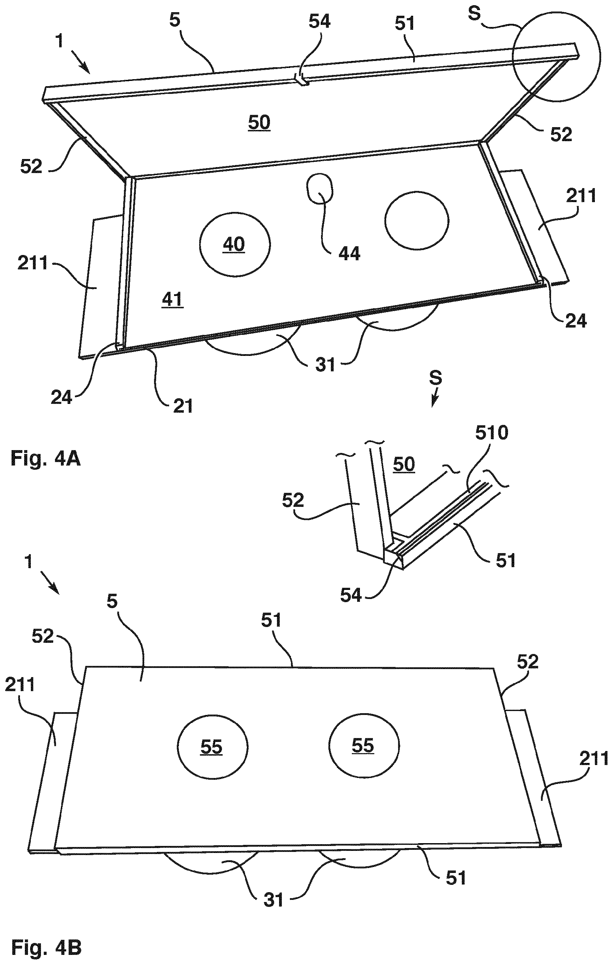

For providing the above advantageous functionality, the cover may preferably comprise at least one appropriately designed filter or the entire cover may be made of an appropriate filter material, whereby preferred embodiments of the cover are described in more detail herein after particularly with reference to Fig. 4A and 4B.

According to a further preferred embodiment the container system comprises a first and second frame and a first and second cutting lid which are arranged on opposite sides of the case board in the third direction, and at least one pod having two opposite openings which are arranged adjacent to one of the first and second cutting lid, whereby one of two openings can be provided with the rim.

The above described embodiment of the container system is adapted to be rotated about 180°, such that mushroom fruiting bodies can grow through the openings and holes on both opposite sides of the case board, successively.

The container system comprising the first and second frame can be closed on both opposite sides via a first and second cover according to an above described closing cover. After harvesting, the container system can be reused for a second round and/or moved using the docking system provided by the first and second docking sides. The same and/or an identically designed cutting lid and closing cover is preferably present adjacent to both openings of the pod.

By detaching the top and bottom cover and the first and second cutting lid, the pods of the container system are fully accessible for cleaning and minimizing the amount of dead volume in the pod. This is beneficial for cleaning and sterilization of at least the pods and/or the covers and/or the cutting lids and/or the case board of the thus at least partially disassembled container system, allowing reusability of the container system.

Substrate can be placed inside the pod, and the container system can be reassembled by closing the lower cutting lid and adding the closing cover, adding the substrate, attaching the top cutting lid and the closing cover and closing it. Sterilization also of the substrate is performed either prior to filling the pods or thereafter, thus sterilizing the at least partially assembled container system together with the substrate to prepare the substrate for inoculation, depending on the sort of fungus, which is selected for cultivation.

By opening the top closing cover the fresh mycelium can develop to fruiting bodies. When the fruiting bodies are fully grown, the top cutting lid is slid and thus the fruiting bodies are cut and harvested. After this first harvest the container system can be rotated 180° via the above described first and second docking sides, if necessary, and the lower closing cover can be opened for a second fruiting phase using the same pod. Thus, the same procedure in growing and cutting the fruiting bodies can be performed.

The case board and/or the pod and/or the cutting lid and/or the cover are preferably made of a material which can effectively withstand high temperatures of minimum about 121° C and high pressures of minimum about 2.5 bar and/or chemical sterilization procedures using for instance NaOH or the like, required for cleaning and sterilization purposes. In this way the sterilized container system can be reused for another cultivation round. This includes, but is not limited to an appropriate plastic such as preferably thermosetting polymer and/or preferably stainless steel.

The container system according to the above described preferred embodiments can preferably be used in a vertical farming system comprising a plurality of racks being arranged subsequently adjacent to each other in the first and second direction. In particular a plurality of container systems can be particularly operated and arranged vertically subsequently adjacent to each other in one rack by machine and/or manual operation, since the container system is adapted to be stacked on each other or to be placed next to each other, thus saving valuable space in a mushroom farm.

The container system according to a preferred embodiment comprises a series of pods, whereby each container system is adapted to grow mycelium in it, and at the top of the container system a variety of cutting lids with different set of holes can be placed, specified for the needs of the mushroom. Fruiting bodies can grow from these holes and act as the to be harvested food source. By sliding the cutting lid in the second direction and perpendicular to the growth direction of the mushrooms, the mushrooms can be cleanly cut at the base and can be harvested in an efficient way. After the harvesting the container system can be reused for a next round of mushroom cultivation.

As described above the individual cutting lid on top of the pods may comprise a variety of individual holes. This variety can induce a different fruiting phase of the cultivated mushroom, if necessary.

The cutting edges of the holes of the cutting lid preferably comprise sharp edges. Thus, by sliding the cutting lid as described above in the second direction and preferably in the reverse direction to the second direction, the fruiting bodies are immediately cut and can be packed.

As described above the container system is adapted for easy and effective assembly, disassembly and reassembly, whereby in particular the cutting lid can be detached from the pods, generating complete openings of the pods for proper cleaning and sterilization purposes. The advantageously cylindrical bodies of the pods are designed to minimize corners such that stacked waste is effectively prevented and improper cleaning can be eliminated.

The above described at least first and second docking sides are adapted for effectively levering the container system by machinery in all directions. This allows proper transportation of the container system in the farm when grown horizontally or vertically. As further described above the containers can be effectively closed via a cover on top of the cutting lid. This ensures sterility during transportation or growth of the fungus in the pods.

### BRIEF DESCRIPTION OF THE DRAWINGS

Exemplary embodiments of the invention are illustrated in the drawings and will be explained in more detail below. In the drawings:
- Fig. 1: shows a schematic perspective exploded view of a container system according to an embodiment of the invention;
- Fig. 2A: shows the container system of Fig. 1 assembled from another perspective;
- Fig. 2B: shows a schematic sectional view of the container system of Fig. 1 and 2A taken along the line L-L from Fig. 1 and 2A;
- Fig. 3A: shows a schematic view of a container system according to an embodiment of the invention from another perspective;
- Fig. 3B: shows a schematic view of a container system according to another embodiment of the invention from a further perspective;
- Fig. 4A: shows the container system according to Fig. 2A together with a cover for the container system in an open position;
- Fig. 4B: shows the container system according to Fig. 4A with the cover in the closed position;
- Fig. 5A: shows a schematic perspective view of the case board and the cutting lid of a container system according to another embodiment;
- Fig. 5B: shows a modification of the embodiment according to Fig. 5A;
- Fig. 6A: shows another modification of the embodiment according to Fig. 5A and 5B;
- Fig. 6B: shows a modification of the embodiment according to Fig. 6A;
- Fig. 7: shows a schematic side view of the embodiment of the container system of Fig. 1 and 2 together with modified embodiments of which;
- Fig. 8A: shows a pod of the container system of Fig 1 and 2A from different perspectives;
- Fig. 8B: shows a modification of the embodiment of the pod of Fig. 8B from different perspectives;
- Fig. 9A: shows a modification of the embodiment of Fig. 3A;
- Fig. 9B: shows another modification of the embodiment of Fig. 3A; and
- Fig. 10: shows a schematic view of embodiments of the container system stacked vertically and laterally in a rack system according to an embodiment of the invention.

The figures contain partially simplified, schematic illustrations. Identical reference signs are sometimes used for elements which are similar, but possibly not identical. Different views of similar elements might be drawn to different scales. Not all reference signs are used in all figures.

### DETAILED DESCRIPTION

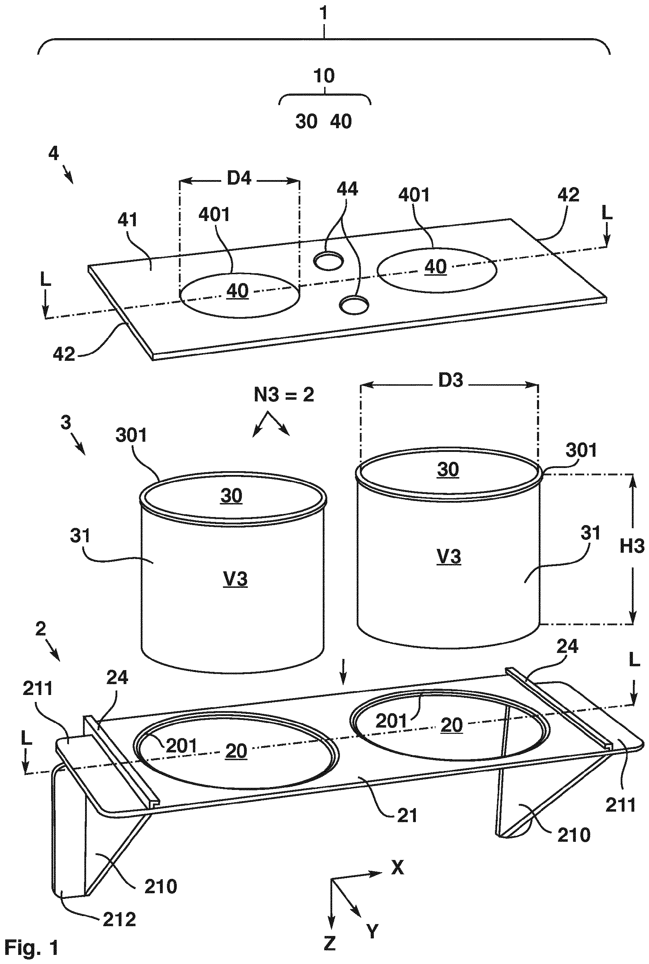

Fig. 1 shows a schematic perspective exploded view of a container system 1 according to an embodiment of the invention, which comprises by example a number N3 of two pods 3 that can be placed into a panel 21 of a case board 2 which is adapted to be arranged in a stackable manner in a rack 6.

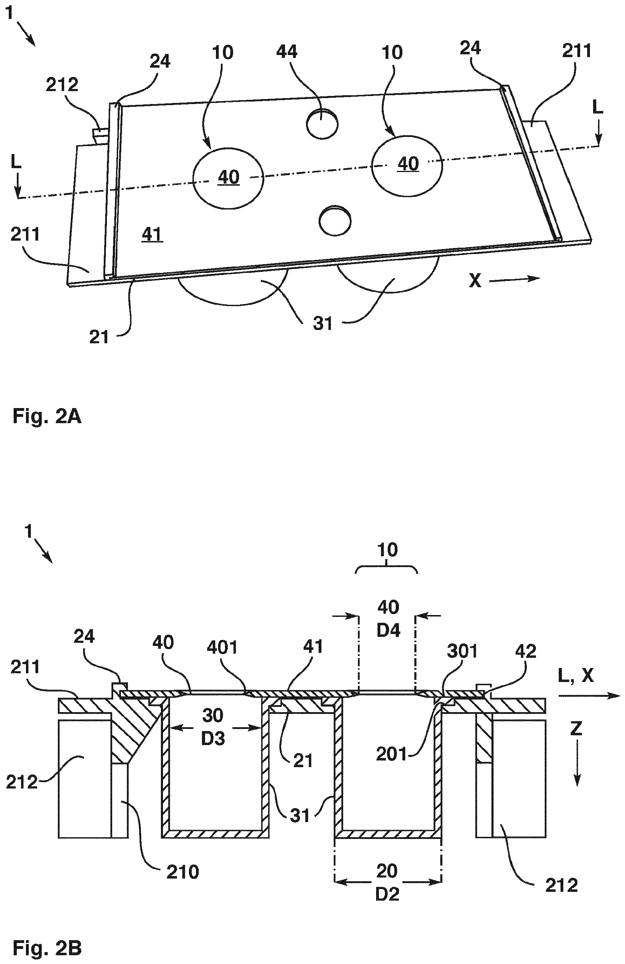

Fig. 2 shows the container system 1 of Fig. 1 assembled from another perspective, and Fig. 2B shows a schematic sectional view of the container system 1 of Fig. 1 and 2A taken along the lines L-L from Fig. 1 and 2A, respectively. The dimensions of the thickness of particularly the panel 21 in the sectional view of Fig. 2B are comparatively enlarged for clarity reasons.

The panel 21 of the case board 2 extends in a first direction X and a second direction Y while the cylindrical bodies 31 of the pods 3, which are arranged to be inserted into a frame 21 provided by the panel 21 of the case board 2, extend in a third direction Z.

The frame 21 of the case board 2 comprises circular holes 20 having a diameter D2 which corresponds to the diameter of the cylindrical body 31 of the pods 3. The holes 20 provide a seat 201 for the pods 3, respectively. The seats 201 correspond to rims 301 provided adjacent to an opening 30 of the pods 3, respectively, such that the pods 3 can be removably inserted into the frame 21.

The container system 1 according an embodiment of the invention may comprise at least one pod and a number of N3 of one to ten pods 3 and most preferably a number N3 of two to six pods 3. The pods 3 are adapted for accommodating a substrate with fungi, nutrients and humidity appropriate for the cultivation of mushrooms M. It is clear that the number N3 of the pods 3 corresponds to the number of the holes 20 in the frame 21 which are adjacently and subsequently arranged in at least one row extending in the first direction X, such that a maximum surface area of the pods 3 is available for heat exchange and air flow.

There is advantageously space provided between the pods 3 which maximizes the heat exchange and air flow in between the pods 3. As described above an individual pod 3 .comprises a cylindrical body 31 having a circular opening 30 adjacent to which a rim 301 is circumferentially arranged. The diameter D3 and the height H3 of the cylindrical pod 3 are selected, respectively, such that the diameter D3 corresponds approximately to the height H3, and the inner volume V3 of the pod 3 amounts to about 0.5 to 1.5 liter and preferably to about 1 liter.

The embodiment of the container system 1 of Fig. 1, 2A and 2B further comprises a flat cutting lid 4 which extends in parallel to the panel 21 of the case board 2 and which is slidably arranged above an opening 30 of the pod 3 for cutting and harvesting mushroom fruit bodies M growing through the opening 10 of the container system 1 at their stem, respectively. It is clear that the opening 10 of the container system 1 is provided by the corresponding arrangement of an opening 30 of the pod 3 and a hole 40 of the cutting lid 4.

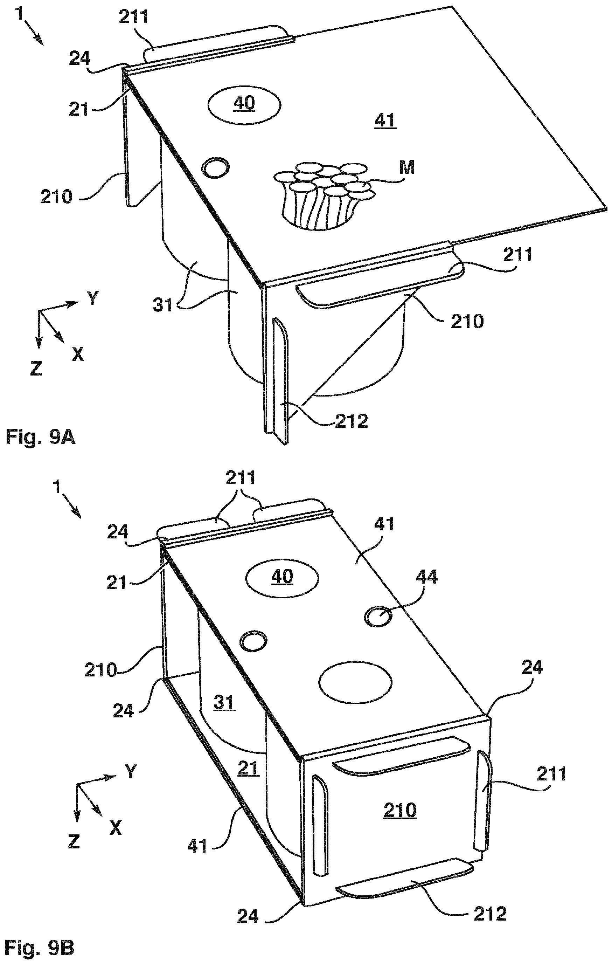

The cutting lid 4 comprises one or more holes 40 allowing the fungus to fruit at that location. The dimension of a cluster of fruiting bodies depends on the dimension of the holes 40, whereby greater holes 40 induce bigger clusters of fruiting bodies while more smaller holes 40 induce smaller clusters of fruiting bodies. The number and sizes of holes 40 may include, but are not limited to, one to six holes 40, the maximum size of which may approximately correspond to the size of an opening 30 of a pod 3. However it is preferred that the maximum size should be limited in that the rim 201 of the opening 20 is covered by the cutting lid 4, so that if the embodiment of Fig. 9B is turned around 180° the rim 201 rests on one of the cutting lids 4.

The cutting lid 4 is slidably arranged in two guide rails 24 which extend into the second direction Y and which are arranged in parallel on the flat panel 21 and on opposite sides of which with respect to the first direction X, whereby the dimension of the cutting lid 4 corresponds to the dimension of the frame 21 such that when the cutting lid 4 is completely inserted into the guide rails 24 the upper surface of the panel 21 is completely covered by the cutting lid 4.

The cutting lid 4 may further comprise at least one operating element 44 adapted for moving the slidable cutting lid 4 by manual and/or machine actuation. The operating element 44 may be provided by a hole 44 in the cutting lid 4 and/or a lug 44 on the cutting lid 4. By such a movement, the opening 10 with fruiting bodies will be closed and thus the mushrooms M will be effectively and cleanly cut substantially perpendicular to their growth through the opening 10 of the container system 1 via preferred sharp edges 401 of the holes 40 in the cutting lid 4. The opening 10 of the container system 1 is provided by the openings 30 of the pods 3 and the hole 40 of the cutting lid 4 which is arranged on top of the openings 30 during the phase of growth of the fungus and the mushrooms M.

Since the case board 2 of the container system 1 according to the embodiment of Fig. 1, 2A and 2B advantageously comprises the guide rails 24 which extend in the second direction Y along the complete panel 24, the container system 1 is particularly effective in operation and easy to assemble. That is to say the cutting lid 4 can be inserted into the guide rails 24 from any opposed side of the case board 2, and moreover the cutting lid 4 can be pulled out of the case board 2 to any side in the second direction Y. Furthermore when inserting the cutting lid 4 into the guide rails 24 there is no need to take care on the correct orientation of the cutting lid 4 besides the arrangement of any side edge 42 of the cutting lid 4 with respect to any of the guide rails 24.

The case board 2 of the container system 1 according to the embodiment of Fig. 1, 2A and 2B advantageously further comprises on each opposite side in the first direction X at least a first docking side 211 and at least a second docking side 212 for providing a support of the case board 2 as well as of the assembled container system 1 in a rack 6 and/or for leverage by machinery in either a horizontal or a vertical growth direction.

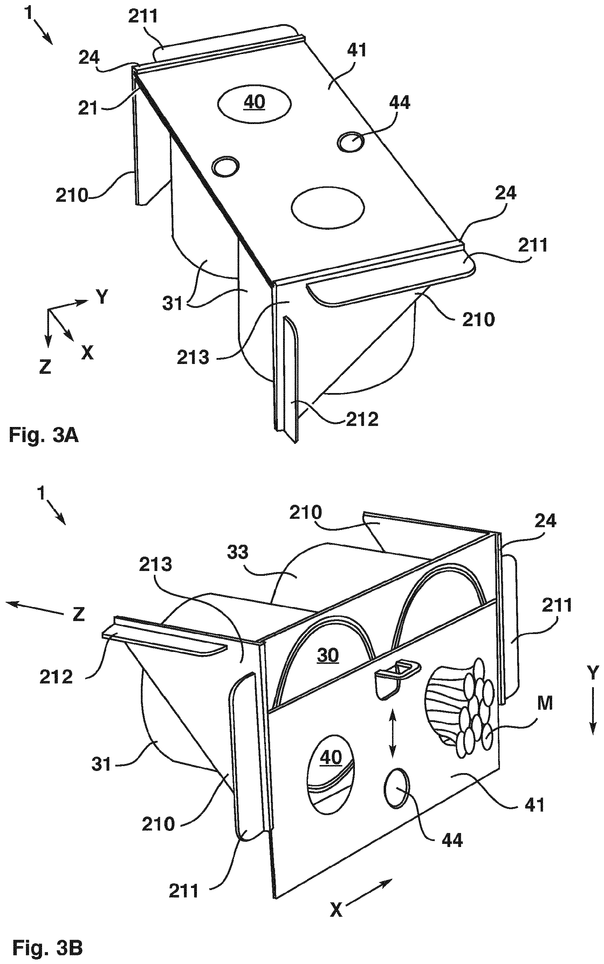

The first docking side 211 extends essentially in the second direction Y, and the second docking side 212 extends essentially in the third direction Z, whereby when the first docking side 211 is horizontally arranged, the second docking side 212 is vertically arranged, and the case board and the assembled container system 1 provide the vertical growth direction. When on the other hand the first docking side 211 is vertically arranged, the second docking side 212 is horizontally arranged, and the case board 2 provides the horizontal growth direction. In this connection it is here referred to the following description with reference to Fig. 3A and 3B.

The first docking side 211 and the second docking side 212 are arranged on a side panel 210 which extends into the second Y and third Z direction on each opposite side of the case board 2 in the first direction X. As by way of example schematically shown on the left side of Fig. 2B, only, the side panel 210 can be stabilized by an additional central support bar which connects the side panel 210 with the plane 21 of the case board 2.

Fig. 3A shows a schematic view of a container system 1 according to an embodiment of the invention from another perspective, and Fig. 3B shows a schematic view of a container system according to another embodiment of the invention from a further perspective.

The embodiment of the container system 1 according to Fig. 3A corresponds substantially to the embodiment of Fig. 1, 2A and 2B.

As a consequence regarding the perspective common features it is here referred to the above description with reference to the corresponding figures.

It is to be noted that the embodiment of the container system 1 according to Fig. 1, 2A, 2B and 3A does not comprise any mechanical stop for moving the slidably arranged cutting lid 4.

Regarding the arrangement of the container system 1 according to Fig. 3A the first docking side 211 the container system 1 which extends essentially in the second direction Y is horizontally arranged, and the second docking side 212 which extends essentially in the third direction Z is vertically arranged, whereby the case board 2 and the assembled container system 1 provide the vertical growth direction.

The embodiment of the container system 1 according to Fig. 3B corresponds substantially with the embodiment of Fig. 3A.

As a consequence regarding the perspective common features it is here referred to the above description with reference to Fig. 3A.

The embodiment of the container system 1 according to Fig. 3B differs from the embodiment according to Fig. 3A in that the cutting lid 4 according to Fig. 3B comprises two operating elements 44, which are provided by a hole 44 in the cutting lid 4 and a hole and an additional lug on the cutting lid 4. It is again to be noted here that the embodiment of the container system 1 according to Fig. 1, 2A, 2B, 3A and 3B does not comprise any mechanical stop for moving the slidably arranged cutting lid 4.

Moreover and contrary to the arrangement of the container system 1 according to Fig. 3A the first docking side 211 of the container system 1 according to Fig. 3B which extends essentially in the second direction Y is vertically arranged. The second docking side 212 which extends essentially in the third direction Z is horizontally arranged, whereby the case board 2 and the container system 1 provides the horizontal growth direction. The arrangement of the horizontal growth direction is particularly preferred to harvest mushrooms M by moving the cutting lid 4 vertically, whereby mushrooms M are substantially perpendicularly cut at their stem, and as a consequence the cut mushrooms M will drop down vertically into a mushroom collecting container which is not shown in Fig. 3B.

Since the embodiment of Fig. 3B does not comprise any mechanical stop the cutting lid 4 can be inserted into and pulled out of the guide rails 24 in the second direction Y and reversely to the second direction Y. It is to be noted that by way of example in Fig. 3B the cutting lid 4 is pulled downwards. In this connection it is here referred to embodiments of the container system 1 according to Fig. 5A, 5B, 6A and 6B which comprise a preferred mechanical stopper for limiting the arrangement of the cutting lid 4 in the guide rails 24 of the case board 2 and for limiting the operation and movement of the cutting lid 4 in the second direction Y as well as for pulling the cutting lid 4 out of the guide rails 24. The embodiments of the container system 1 which comprise the mechanical stopper 241, 421 will be herein after described with reference to the respective figures.

Fig. 4A shows the container system 1 according to Fig. 2A together with a cover 5 for the container system 1 in an open position, and Fig. 4B shows the container system 1 according to Fig. 4A with the cover 5 in the closed position together with an enlarged view of the section S of Fig. 4A from another perspective. Contrary to the embodiment of Fig. 2A, the cutting lid 4 of the container system 1 comprises merely one operating element 44.

The container system 1 according to Fig 4A and B comprises the closing cover 5 which is designed to be placed over the cutting lid 4, whereby sterility of the substrate inside the pods 3 during transport and mycelium growth is maintained, and whereby when the cover 5 is open, the fruiting phase of fungus can be induced.

The cover 5 comprises an inner side 50 and two opposite first side frames 51 extending into the first direction X, and two opposite second side frames 52 extending into the second direction Y, whereby the cover 5 corresponds with the cutting lid 4, the frame 21 and the first and second guide rail 24 such that the cover 5 is attached on the cutting lid 4 and/or the frame 21 and/or the first and second guide rail 24 in a form-locked and/or force-locked manner. For this function and purpose particularly the frames 51 and 52 of the cover 5 and the cutting lid 4 and/or the frame 21 and/or the first and second guide rail 24 can be designed as a corresponding attachment cover mating connection system, which provides a detachable but stable for instance press-fit connection, snap-fit connection, push-pull connection or the like. Preferably the connection is designed that it can withstand a tensile force of about 1 to 3 Newton and more preferably of about 2 Newton, particularly for providing a securely attached lower cover 5 for the container system 1 according to the herein after described embodiment of Fig. 9B, which is rotated 180°.

In the closed position, the first side frames 51 are arranged in the first direction X adjacent to a side edge of the cutting lid 4 and the frame 21, respectively. In this position the second side frames 52 are arranged in the second direction Y on the first docking sides 211 adjacent to the guide rails 24. Moreover the inner surface 50 of the cover 5 rests on the upper surface of the guide rails 24. For providing a preferably secure and safe connection of the cover 5 on the cutting lid 4 and/or the frame 21 the first side frames 51 may comprise at least one locking element 54 which works together with the edges of the cutting lid 4 and/or the frame 21 for providing the above described secure attachment by a for instance press-fit connection, snap-fit connection, push-pull connection or the like.

For providing a preferably air-tight attachment, the inner side of the frames 51 and 52 may comprise a circumferential sealing element 510, which is together with the locking element 54 merely schematically indicated in the enlarged depicted section S. The sealing element 510 may comprise any effective sealing material such as plastic, stainless steel, silicon or the like. Alternatively to the above described attachment cover mating connection system, the entire cover 5 may be formed of a flexible elastic plastic material, such as plastic, stainless steel, silicone or the like, whereby the cover 5 can be formed as a stretchable membrane, which can be stretched over the cutting lid 4, the frame 21 and the first and second guide rail 24.

In addition to the cover 5 of the container system 1 according to the embodiment of Fig. 4A, the embodiment according to Fig. 4B comprises by way of example two filters 55 of a material that gasses can freely move through the cover 5, but microorganisms cannot. A filter 55 can be provided by a plastic microfiltration sheet as used in food industry, such as polypropylene (PP), polysulfone (PS) or polyvinylidene fluoride (PVDF). A filter 55 is particularly of advantage for maintaining sterility of the substrate inside a pod 3, whereby at the same time the fruiting phase of fungus can be induced. A filter 55 can be detachably attached to the cover 5 and preferably correspond in its shape and dimension to at least one hole 40 of the cutting lid 4. Moreover the entire cover 5 can be made of an above described filter material, such that the entire cover 5 represents a filter 55 and provides the above advantageous filter effects.

Fig. 5A shows a schematic perspective view of the case board 2 and the cutting lid 4 of a container system 1 according to another embodiment and Fig, 5B shows a modification of the embodiment according to Fig. 5A.

The container system 1 comprising the case board 2 and the cutting lid 4 according to the embodiment of Fig. 5A substantially corresponds to the embodiment of Fig. 1, 2A and 2B. As a consequence reference is made here to the above corresponding description. Contrary to the embodiment of Fig. 2A, the cutting lid 4 of the container system 1 comprises merely one operating element 44.

Moreover contrary to the embodiment of Fig. 1, 2A and 2B, the case board 2 and the cutting lid 4 of the container system 1 according to Fig. 5A comprises a mechanical stopper element pair 241, 421, which provides a mechanical stopper 241, 421 for the arrangement of the cutting lid 4 in the guide rails 24 of the case board 2 and for the operation and movement of the cutting lid 4 in the second direction Y as well as for pulling the cutting lid 4 out of the guide rails 24.

The mechanical stopper 241, 421 according to the embodiment of Fig. 5A is provided by two opposite protrusions 421 which extend from two corners of the cutting lid 4 in the first direction X, respectively, and which correspond to recesses 241 in the guide rails 24, respectively, such that a mechanical stop for the cutting lid 4 is provided in the second direction Y. While the protrusions 421 extend from two corners of the cutting lid 4, the recesses 241 are arranged on both sides of each guide rail 24, such that the cutting lid 4 can be inserted from both sides of the case board 2, namely in the second direction Y and reversely to the second direction Y, respectively. However in each case the completely inserted cutting lid 4 is securely stopped by the correspondingly formed mechanical stopper elements 241, 421, such that the cutting lid 4 can only be pulled out of the guide rails 24 of the case board 2 in the reverse direction with respect to its insertion direction.

The container system 1 comprising the case board 2 and the cutting lid 4 according to the embodiment of Fig. 5B again substantially corresponds to the embodiment of Fig. 1, 2A and 2B, and as a consequence reference is made here to the above corresponding description. Similar to the embodiment of Fig. 5A, the case board 2 and the cutting lid 4 of the container system 1 according to Fig. 5B comprises a mechanical stop element pair 241, 421, which provides a mechanical stopper 241, 421 for the arrangement of the cutting lid 4 in the guide rails 24 of the case board 2 and for limiting the operation and movement of the cutting lid 4 in the second direction Y as well as for pulling the cutting lid 4 out of the guide rails 24.

The mechanical stopper 241, 421 according to the embodiment of Fig. 5B is provided by recesses 421 arranged at all four corners of the cutting lid 4, respectively, which correspond to blocks 241 at one end of each guide rail 24, respectively, such that a mechanical stop for the cutting lid 4 is provided in the second direction Y. While the recesses 421 are provided at all four corners of the cutting lid 4, the blocks 241 are arranged on only one side end of each guide rail 24, such that the cutting lid 4 can be inserted in the second direction Y from one side of the case board 2. As with the embodiment of Fig. 5A, the completely inserted cutting lid 4 is securely stopped by the correspondingly formed mechanical stopper elements 241, 421, such that the cutting lid 4 can only be pulled out of the guide rails 24 of the case board 2 in the reverse direction with respect to its insertion direction.

Fig. 6A shows a schematic perspective view of the case board 2 and the cutting lid 4 of a container system 1 according to another embodiment and Fig, 6B shows a modification of the embodiment according to Fig. 6A.

In addition or alternative to the stopper element provided by an element pair 241, 421 according to the embodiments of Fig. 5A and 5B, an effective stopper element also for the embodiment of Fig. 1 can be provided by a stop bar 25, which is arranged along one side of the case board 2 in the first direction X, and which connects the two guide rails 24. Regarding the above introduced term stopper element pair used in the description of the embodiments according to Fig. 5A and 5B, the additional or alternative stopper element pair is represented by the stop bar 25 and by one side edge of the cutting lid 4, which extends in the first direction X and which is stopped by the stop bar 25 when the cutting lid 4 is completely inserted into the guide rails 24 on the panel 21 of the case board 2.

It is clear that the stop bar 25 can be also designed in its cross-section in an L-shaped form corresponding to the guide rails 24, such that when the cutting lid is completely arranged on top of the panel 21, the cutting lid 4 is stopped by the side bar 25 while one side edge of which being inserted in the L-shaped stop bar 25. It is further clear that the cutting lid 4 of the embodiment according to Fig. 6A does not comprise any protrusion or recess 421.

The embodiment according to Fig. 6B corresponds to the above embodiment according to 6A and comprises in addition to the stop bar 25 a second bar 25, which extends along the other side of the case board 2 in the first direction X and which connects the two guide rails 24. Contrary to the stop bar 25, a slot is provided between the second bar 25 and the frame 21, for intake and further guidance of the cutting lid 4. The first guide rail 24, the stop bar 25, the second guide rail 24 and the second bar 25 provide a circumferential frame on top of the panel 21, which stabilizes the case board 2 and which provides a support for the above with reference to Fig. 4A and 4B described inner side 50 of the closing cover 5.

It is clear that a preferably functional operating element 44 for the cutting lid 4 of the embodiment according to Fig. 6B can be provided for instance by at least one lug 44 which extends out of the slot under the second bar 25 in the reverse direction to the second direction Y.

From the function and purpose of the above with reference to Fig. 5A, 5B, 6A and 6B described mechanical stopper 241, 421 it is clear that contrary to the above with reference to Fig. 3B described harvesting method, when harvesting mushrooms M, the cutting lid 4 being vertically aligned, because of the consequently proper and functional arranged mechanical stopper 241, 421 and/or 25, the cutting lid 4 of the above described embodiments will in each case be pulled out upwards out of the vertically arranged guide rails.

Another additional or alternative stopper element particularly also for the embodiment of Fig. 1, which is again not shown in the drawings, can be provided by at least one appropriately formed and arranged flat spring which puts a predetermined pressure on the cutting lid 4, such that the cutting lid 4 is frictionally engaged on the case board 2. The predetermined pressure is particularly selected in that the cutting lid 4 can be inserted and pulled out of the guide rails 24 by a predetermined driving power, and on the other hand that the entirely inserted cutting lid 4 holds its position on the case board 2, when the container system 1 is tilted such that the second direction Y is vertically arranged.

The at least one appropriately designed and arranged flat spring can particularly be arranged at least at one of the guide rails 24, whereby the flat spring and the guide rail 24 can be formed as a unitary piece.

Regarding again the term stopper element pair used in the above description of the embodiments according to Fig. 5A, 5B, 6A and 6B, the additional or alternative stopper element pair is represented by the spring properties of the flat spring and by thickness of the cutting lid 4 as well as the frictional surface conditions of the panel 21 and the cutting lid 4.

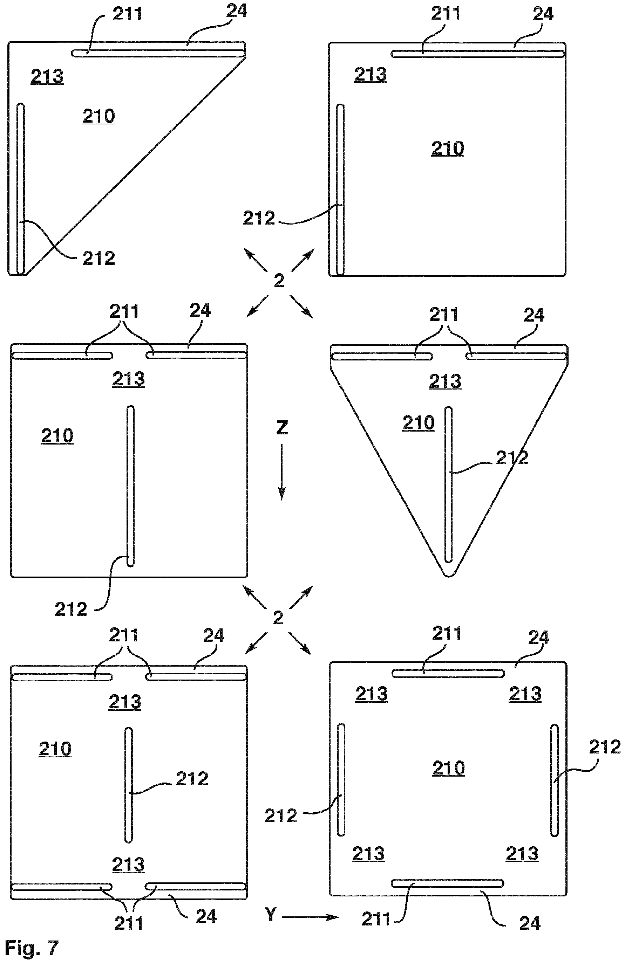

Fig. 7 shows a schematic side view on the side panel 210 of the embodiment of the container system 1 of Fig. 1 and 2 together with modified embodiments of which.

The upper left side panel 210 in the form of a triangle of Fig. 7 represents the embodiment of the side panel 210 together with the first 211 and second 212 docking side which extend in the second Y and third Z direction, respectively, and which corresponds to the embodiments of Fig. 1, 2A, 2B, 3A and 3B. As a consequence reference is made here to the above corresponding descriptions. In addition it is here indicated that a predetermined pitch 213 is provided between the first 211 and second 212 docking side, such that the first 211 and second 212 docking side being spaced apart for proper machine and/or robot arm operation and/or seat on a support provided at a frame 60 of a rack 6. The side panel 210 in the form of a triangle is particularly of advantage, since it is mechanically stable.

In the first modification of the above embodiment of the side panel 210, the side panel 210 is designed in the form of a square, whereby in other respects the first 211 and second 212 docking sides together with their pitch 123 arrangement corresponds to the above described embodiment.

The second modification of the side panel 210 is also designed in the form of a square, whereby the first docking side 211 which extends into the second direction Y is split into two parts by a central pitch 213, and whereby adjacent to the central pitch 213 the second docking side extends centrally in the third direction Z.

The third modification of the side panel 210 corresponds to the above second modification with the first docking side 211, which extends into the second direction Y is split into two parts by the central pitch 213, whereby adjacent to the central pitch 213 the second docking side extends centrally in the third direction Z, and whereby in addition the panel 210 is designed in the form of a preferably stable triangle.

The fourth modification of the side panel 210 is again designed in the form of a square, whereby the first docking side 211 which extends into the second direction Y is split into two parts by a central pitch 213, and whereby adjacent to the central pitch 213 the second docking side extends centrally in the third direction Z. In addition to the above second modification, the side panel 210 comprises a third docking side which extends in the second direction Y.

The third docking side corresponds to the first docking side 211 and is provided in the third direction Z on the opposite side with respect to the first docking side 211 on the side panel 210. The third modification of the side panel 210 is particularly applicable for the embodiment of the container system 1 according to Fig. 9B which will be described hereinafter.

The fifth modification of the side panel 210 is again designed in the form of a square, whereby the side panel 210 comprises two first docking sides 211 which extend into the second direction Y and which are arranged adjacent to opposite sides of the side panel 210 in the third direction Z. Moreover the side panel 210 comprises two second docking sides 212 which extend into the third direction Z and which are arranged adjacent to opposite sides of the side panel 210 in the second direction Y. This side panel 210 comprises four pitches 213 at the four corners of which.

The fifth modification of the side panel 210 is again particularly applicable for the embodiment of the container system 1 according to Fig. 9B which will be described hereinafter.

The above modifications of the side panel 210 and their design and arrangement of the first 211 and second 212 docking side all comprise at least one pitch 123 being provided for proper machine and/or robot arm operation and/or seat on a support provided at a frame 60 of a rack 6.

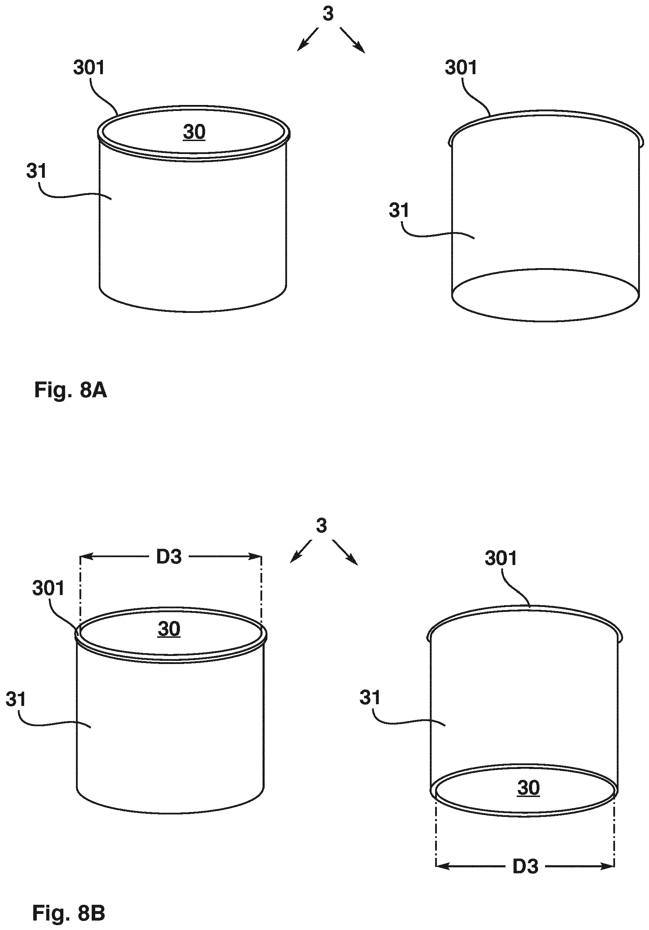

Fig. 8A shows a pod 3 of container system of Fig 1 and 2A from different perspectives, and Fig. 8B shows a modified embodiment of the pod 3 from different perspectives. As described above the pod 3 of Fig. 8A comprises a cylindrical body 31 and an opening 30, whereby the cylindrical body 31 comprises a bottom on the opposite side of the single opening 30 of the pod 3.

The modified pod 3 of the embodiment according to Fig. 8B comprises likewise a cylindrical body 31 and an opening 30. However contrary to the embodiment of the pod according to Fig. 8A the cylindrical body 31 comprises a second opening 30 on the opposite side of the opening 30 of the pod 3. Both openings 30 have the identical diameter D3, however only the first opening 30 is surrounded by the rim 301. The modified pod 3 of the embodiment according to Fig. 8B is particularly applicable for the embodiment of the container system 1 according to Fig. 9B which will be described hereinafter.

Fig. 9A shows a modification of the container system 1 according to the embodiment of Fig. 3A, which corresponds substantially to the embodiment of Fig. 3A. As a consequence reference is made here to the above corresponding description. Contrary to the embodiment of Fig. 3A the container system according to the embodiment of Fig. 9A comprises a cutting lid 4 which comprises only one operating element 44. Moreover the cutting lid 4 is extended into the second direction Y, whereby the panel 41 provides a region for simultaneously collecting mushrooms M while cutting the vertically grown mushrooms M by moving the cutting lid 4 horizontally.

Fig. 9B shows another modification of the container system 1 according to the embodiment of Fig. 3A, which again corresponds substantially to the embodiment of Fig. 3A, and as a consequence reference is made here to the above corresponding description. Contrary to the embodiment of Fig. 3A the container system according to the embodiment of Fig. 9B comprises a first and second frame 21 and a first and second cutting lid 4 which are arranged on opposite sides of the case board 2 in the third direction Z, whereby the at least one pod 3 comprises two opposite openings 30 being arranged adjacent to one of the first and second cutting lid 4, whereby one of two openings 30 is provided with the rim 301.

The container system 1 according to the embodiment of Fig. 9B can be closed on both opposite sides via the above described closing cover 5, which is not shown in Fig. 9B. After harvesting, the container system 1 can be reused for a second round and/or moved using the docking system provided by the first 211 and second 212 docking sides of the container system 1. The same and/or an identically designed cutting lid 4 and closing cover 5 is present adjacent to both openings 30 of the pod 3 according to the above described embodiment of Fig. 8B. The second cutting lid 4 has the following preferred functions.

By detaching the top and bottom cutting lid 4 the pods 3 of the container system 1 are fully accessible for cleaning and minimizing the amount of dead volume in the pod 3. This is beneficial for the cleaning procedure and sterility of the pods 3 in the container system 1, allowing reusability of the container system 1.

Substrate can be placed inside the pod 3 by closing the lower cutting lid 4 and adding the closing cover 5, adding the substrate, attaching the top cutting lid 4 and the closing cover 5 and closing it. Then sterilization is performed to prepare the substrate for inoculation.

By opening the top closing cover 5 the fresh mycelium can develop to fruiting bodies. When the fruiting bodies are fully grown, the top cutting lid 4 is slid and thus the fruiting bodies are cut and harvested. After this first harvest the container system 1 can be rotated 180°, if necessary, and the lower closing cover 5 can be opened for a second fruiting phase using the same pod 3. Thus, the same procedure in growing and cutting the fruiting bodies can be performed.

By way of example the two side panels 210 of the container system 1 according to the embodiment of Fig. 9B represent the above with reference to Fig. 7 described fourth and fifth modification of the side panel 210. It is clear that preferably the two side panels 210 of the container system 1 are identical. Moreover it is clear that the first and second frame 21 and the first and second cutting lids 4 can comprise a stopper element 241, 421, respectively which is preferably arranged on the same side of the container system 1 in the second direction Y, for being at both frames 21 properly arranged downwards, when the container system 1 is rotated 90° in the second direction Y.

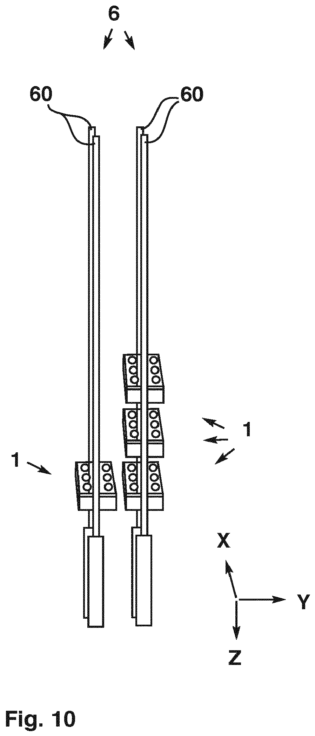

Fig. 10 shows a schematic view of embodiments of the container system 1 stored in a first and second rack 6 according to an embodiment of the invention. The container systems 1 of Fig. 10 comprise six holes 10, which correspond to six pods 3, and which are arranged in two parallel rows subsequently adjacent to each other in the first direction X.

By way of example Fig. 10 shows a first and second rack 6 which comprise two frames 60, respectively. The two frames 60 of the racks 6 are arranged on opposite sides of the racks 6 in the first direction X. The two racks 6 are arranged adjacent and subsequently to each other in the second direction Y. By way of example one container system 1 is arranged at a predetermined position in the first rack 6, and three container systems 1 are stacked vertically and subsequently adjacent to each other in the second rack 6.

A rack 6 system can comprise a plurality of racks 6 comprising two vertically arranged frames 60 which are arranged subsequently to each other in the first direction building a first row of racks 6 extending in the first direction X. Moreover the rack 6 system can comprise a plurality of the above described first row of racks 6 which are subsequently arranged adjacent to each other in the second direction Y. Each of said racks 6 which may accommodate a plurality of container systems 1 stacked vertically subsequently adjacent to each other in one rack 6.

The rack 6 system is arranged in that the plurality of rows of racks 6 and/or the plurality of individual racks 6 can be horizontally moved independently from each other in the first direction X and/or in the second direction Y, whereby the individual racks can be accessibly arranged particularly by automated machinery and/or robots for operating the mushroom cultivation and harvesting container system 1.

The above with reference to Fig. 1 to 10 described embodiments of the mushroom M cultivation and harvesting container system 1 for fungi, focusing on edible mushrooms M. The container system 1 comprises a number N3 of at least one and preferably a number N3 of two to six pods 3 which are arranged in at least one row subsequently adjacent to each other in the first direction X of the frame 21 provided by the panel 21 of the case board 2.

By this arrangement of the pods 3 in-between ventilation ducts are advantageously provided for preferable heat exchange by air circulation. On top of the case board 2 a cutting lid 4 is slidably arranged that functions as a harvesting tool by cutting mushroom fruiting bodies M at the top of the lid 4 by sliding the cutting lid 4 over the pods 3 and the frame 21 of the case board 2. The cutting lid 4 can comprise one or more cutting holes 40, depending on the type of fungus that is grown in the pod 3.

The case board 2 comprises on to opposite sides of which a first docking side 211 and second docking side 212 for supporting the arrangement of the case boards in a rack 6 and/or for automatic transportation of the assembled container system 1 comprising the pods 3 arranged in the frame 21 of the case board 2 and the cutting lid 4. The assembled container system 1 can be tilted so that the opening 30 of the pods 3 together with the cutting holes 40 of the cutting lid 4 which represent the opening 10 of the container system 1 is either vertically oriented or horizontally oriented for the growth of different fungi.

Even where combinations of different aspects or features of the invention are shown in the figures in each case, it is clear to the person skilled in the art - unless indicated otherwise - that the combinations shown and discussed are not the only possible combinations. In particular, mutually corresponding units or feature complexes from different exemplary embodiments can be interchanged with one another. For the sake of clarity not all possible reference signs are shown in all figures.

### REFERENCE SIGNS

- 1: mushroom cultivation and harvesting container system, container system
- 10: opening

- 2: case board
- 20: hole, opening
- 201: edge, step, seat
- 21: panel, frame
- 210: side panel
- 211, 212: side extension, operating element, docking side
- 24: track, guide rail
- 25: bar, stop bar
- 241: recess, block
- 241, 421: mechanical stopper, stopper element pair

- 3: pod, vessel
- 30: opening
- 301: rim
- 31: body

- 4: lid, cutting lid
- 40: hole
- 401: edge
- 41: panel
- 42: side edge
- 421: protrusion, recess
- 44: operating element, hole, lug

- 5: cover, cap
- 50: inner surface
- 51, 52: frame
- 510: sealing
- 54: locking element, spring element, clamp

- 6: rack
- 60: frame

- D2, D3, D4: diameter
- H3: height
- L: intersection line
- M: mushroom, fruit body
- N3: number
- S: section
- V3: volume
- X, Y, Z: direction

## Claims

1. Mushroom (M) cultivation and harvesting container system (1) comprising:
- a rack (6);
- at least one flat panel (21) extending in a first (X) and second (Y) direction and providing a frame (21) for at least one pod (3);
- the pod (3) being adapted to be inserted into the frame (21) and for accommodating substrate with fungi, nutrients and humidity appropriate for the cultivation of mushrooms (M);
**characterised in that**
- a case board (2) comprising the frame (21),
the case board (2) being adapted to be stored in a stackable manner and operated in the rack (6);
- at least one flat cutting lid (4) which extends in parallel to the panel (21) and which is slidably arranged above an opening (30) of the pod (3) for cutting and harvesting mushroom fruit bodies (M) growing through the opening (30) at their stem, respectively.

2. The container system (1) according to claim 1, wherein
at least one hole (20) in the panel (21) of the case board (2) provides a seat (201) for the at least one pod (3) having a cylindrical body (31), and wherein
the seat (201) corresponds to a rim (301) being circumferentially arranged adjacent to the opening (30) of the pod (3), whereby the dimension of the body (31) and the rim (301) correspond to the dimension of the hole (20) and the seat (201), respectively, such that the pod (3) can be removably inserted into the frame (21), whereby the inserted pod (3) is accommodated in the seat (201).

3. The container system (1) according to claim 1 or 2, wherein
the container system (1) comprises a number (N3) of two to ten pods (3) and preferably of two to six pods (3), the number (N3) of which corresponds with the number of holes (20) in the frame (21) which are adjacently and subsequently arranged in at least one row extending in the first direction (X), such that a maximum surface area of the pods (3) is available for heat exchange and air flow.

4. The container system (1) according to one of claims 1 to 3, wherein
the diameter (D3) of the opening (30) and the height (H3) of the cylindrical pod (3) are selected, respectively, such that the diameter (D3) corresponds approximately to the height (H3), and the inner volume (V3) of the pod (3) amounts to about 0.5 to 1.5 liter and preferably to about 1.0 liter.

5. The container system (1) according to one of claims 1 to 4, wherein
the cutting lid (4) is slidably arranged in two guide rails (24) which extend into the second direction (Y) and which are arranged in parallel on the flat panel (21) and on opposite sides of which with respect to the first direction (X), whereby
the dimension of the cutting lid (4) corresponds to the dimension of the frame (21) such that when the cutting lid (4) is completely inserted into the guide rails (24) the upper surface of the panel (21) is completely covered by the cutting lid (4), whereby
the container system (1) can comprise at least one mechanical stopper (241, 421; 25) particularly for limiting the movement of the cutting lid (4) in the second direction (Y).

6. The container system (1) according to claim 5, wherein
the cutting lid (4) comprises at least one hole (40) providing a sharp edge (401) which is adapted to cut the stem of mushroom fruit bodies (M) growing and extending from the opening (30) through the hole (40) substantially perpendicular to their growth direction,
whereby the hole (40) is smaller than the opening (30), and whereby the cutting lid (4) is arranged to cut the fungi adjacent to the opening (30) of the pod (3) by pulling the cutting lid (4) in the second direction (Y) and preferably in the reverse direction to the second direction (Y) out of the guide rails (24) and away from the pod (3), and whereby the cutting lid (4) comprises at least one operating element (44) for manual or machine operation of the cutting lid (4).

7. The container system (1) according to one of claims 1 to 6,
comprising a plurality of interchangeable cutting lids (4) which vary in the number and/or dimension and/or shape of their cutting holes (40), thereby providing different cutting lids (4) for different fruiting body growth of the fungus in the pod (3).

8. The container system (1) according to one of claims 1 to 7, wherein
the case board (2) comprising on each opposite side in the first direction (X) at least a first docking side (211) and at least a second docking side (212) for providing a support of the case board (2) in the rack (6) and/or for leverage by machinery in either a horizontal or a vertical growth direction;
the first docking side (211) extending essentially in the second direction (Y), and
the second docking side (212) extending essentially in the third direction (Z), whereby
when the first docking side (211) extending in the second direction (Y) is horizontally arranged, the second docking side (212) extending in the third direction (Z) is vertically arranged, and
the case board (2) provides the vertical growth direction, and when the first docking side (211) extending in the second direction (Y) is vertically arranged, the second docking side (212) extending in the third direction (Z) is horizontally arranged, and
the case board (2) provides the horizontal growth direction.

9. The container system (1) according to claim 8, whereby
the first (211) and second (212) docking side are arranged on a side panel (210) extending in the second (Y) and third (Z) direction on each opposite side of the case board (2) in the first direction (X), and whereby
a predetermined pitch (213) is provided between the first (211) and second (212) docking side such that the first (211) and second (212) docking side being spaced apart for proper machine and/or robot arm operation and/or seat on a support provided at a frame (60) of the rack (6).

10. The container system (1) according to one of claims 1 to 9,
comprising a closing cover (5) which is designed to be placed over the cutting lid (4) such that sterility of the substrate inside the pod (3) during transport and mycelium growth is maintained;
the cover (5) is designed such that when the cover (5) is open, the fruiting phase of fungus can be induced, or
the cover (5) is designed such that when the cover (5) is in the closed position, the fruiting phase of fungus can be induced; wherein the inner side (50) of the cover (5) together with the opening (30) of the pod (3) and the hole (40) of the cutting lid (4) is hermetically sealed, or
the cover (5) comprises at least one filter (55) of a material that gasses can freely move through but microorganisms cannot, or the entire cover (5) is made of a material that gasses can freely move through but microorganisms cannot.

11. The container system (1) according to claim 10, wherein the cover (5) comprises an inner side (50) and two opposite first side frames (51) extending in the first direction (X), and two opposite second side frames (52) extending in the second direction (Y), whereby the cover (5) corresponds with the frame (21) and the first and second guide rail (24) such that the cover (5) is attached in a form-locked and/or force-locked manner on the cutting lid (4) and/or the frame (21) and/or the first and second guide rail (24).

12. The container system (1) according to one of claims 1 to 11, comprising a first and second frame (21) and a first and second cutting lid (4) which are arranged on opposite sides of the case board (2) in the third direction (Z), whereby
the at least one pod (3) comprises two opposite openings (30) being arranged adjacent to one of the first and second cutting lid (4), whereby one of two openings (30) is provided with the rim (301).

13. The container system (1) according to claim 12, whereby
the container system (1) is adapted to be rotated about 180°, such that mushroom fruiting bodies (M) can grow through the holes (10) on both opposite sides of the case board (2), successively.

14. The container system (1) according to one of claims 1 to 13,
whereby the case board (2) and/or the pod (3) and/or the cutting lid (4) and/or the cover (5) are made of a material which can effectively be cleaned and sterilized such as an appropriate plastic and preferably thermosetting polymer and/or preferably stainless steel.

15. Use of the container system (1) according to one of claims 1 to 14 in a vertical farming system comprising a plurality of racks (6) being arranged subsequently adjacent to each other in the first (X) and second (Y) direction, whereby
a plurality of container systems (1) can be particularly operated and arranged vertically subsequently adjacent to each other in one rack (6) by machine and/or manual operation.

## Amended claims

### Amended claims in accordance with Rule 137(2) EPC.

1. Mushroom (M) cultivation and harvesting container system (1) comprising:
- a rack (6);
- at least one flat panel (21) extending in a first (X) and second (Y) direction and providing a frame (21) for at least one pod (3);
- the pod (3) being adapted to be inserted into the frame (21) and for accommodating substrate with fungi, nutrients and humidity appropriate for the cultivation of mushrooms (M); **characterised in that**
- a case board (2) comprising the frame (21),
the case board (2) being adapted to be stored in a stackable manner and operated in the rack (6);
- at least one flat cutting lid (4) which extends in parallel to the panel (21) and which is slidably arranged above an opening (30) of the pod (3) for cutting and harvesting mushroom fruit bodies (M) growing through the opening (30) at their stem, respectively;
- the case board (2) comprising on each opposite side in the first direction (X) at least a first docking side (211) and at least a second docking side (212) for providing a support of the case board (2) in the rack (6) and/or for leverage by machinery in either a horizontal or a vertical growth direction.

2. The container system (1) according to claim 1, wherein
at least one hole (20) in the panel (21) of the case board (2) provides a seat (201) for the at least one pod (3) having a cylindrical body (31), and wherein
the seat (201) corresponds to a rim (301) being circumferentially arranged adjacent to the opening (30) of the pod (3), whereby
the dimension of the body (31) and the rim (301) correspond to the dimension of the hole (20) and the seat (201), respectively, such that the pod (3) can be removably inserted into the frame (21), whereby the inserted pod (3) is accommodated in the seat (201).

3. The container system (1) according to claim 1 or 2, wherein
the container system (1) comprises a number (N3) of two to ten pods (3) and preferably of two to six pods (3), the number (N3) of which corresponds with the number of holes (20) in the frame (21) which are adjacently and subsequently arranged in at least one row extending in the first direction (X), such that a maximum surface area of the pods (3) is available for heat exchange and air flow.

4. The container system (1) according to one of claims 1 to 3, wherein
the diameter (D3) of the opening (30) and the height (H3) of the cylindrical pod (3) are selected, respectively, such that
the diameter (D3) corresponds approximately to the height (H3), and the inner volume (V3) of the pod (3) amounts to about 0.5 to 1.5 liter and preferably to about 1.0 liter.

5. The container system (1) according to one of claims 1 to 4, wherein
the cutting lid (4) is slidably arranged in two guide rails (24) which extend into the second direction (Y) and which are arranged in parallel on the flat panel (21) and on opposite sides of which with respect to the first direction (X), whereby
the dimension of the cutting lid (4) corresponds to the dimension of the frame (21) such that when the cutting lid (4) is completely inserted into the guide rails (24) the upper surface of the panel (21) is completely covered by the cutting lid (4), whereby
the container system (1) can comprise at least one mechanical stopper (241, 421; 25) particularly for limiting the movement of the cutting lid (4) in the second direction (Y).

6. The container system (1) according to claim 5, wherein
the cutting lid (4) comprises at least one hole (40) providing a sharp edge (401) which is adapted to cut the stem of mushroom fruit bodies (M) growing and extending from the opening (30) through the hole (40) substantially perpendicular to their growth direction,
whereby the hole (40) is smaller than the opening (30), and whereby the cutting lid (4) is arranged to cut the fungi adjacent to the opening (30) of the pod (3) by pulling the cutting lid (4) in the second direction (Y) and preferably in the reverse direction to the second direction (Y) out of the guide rails (24) and away from the pod (3), and whereby the cutting lid (4) comprises at least one operating element (44) for manual or machine operation of the cutting lid (4).

7. The container system (1) according to one of claims 1 to 6,
comprising a plurality of interchangeable cutting lids (4) which vary in the number and/or dimension and/or shape of their cutting holes (40), thereby providing different cutting lids (4) for different fruiting body growth of the fungus in the pod (3).

8. The container system (1) according to one of claims 1 to 7, wherein
the first docking side (211) extending essentially in the second direction (Y), and
the second docking side (212) extending essentially in the third direction (Z), whereby
when the first docking side (211) extending in the second direction (Y) is horizontally arranged, the second docking side (212) extending in the third direction (Z) is vertically arranged, and
the case board (2) provides the vertical growth direction, and
when the first docking side (211) extending in the second direction (Y) is vertically arranged, the second docking side (212) extending in the third direction (Z) is horizontally arranged, and
the case board (2) provides the horizontal growth direction.

9. The container system (1) according to claim 8, whereby
the first (211) and second (212) docking side are arranged on a side panel (210) extending in the second (Y) and third (Z) direction on each opposite side of the case board (2) in the first direction (X), and whereby
a predetermined pitch (213) is provided between the first (211) and second (212) docking side such that the first (211) and second (212) docking side being spaced apart for proper machine and/or robot arm operation and/or seat on a support provided at a frame (60) of the rack (6).

10. The container system (1) according to one of claims 1 to 9,
comprising a closing cover (5) which is designed to be placed over the cutting lid (4) such that sterility of the substrate inside the pod (3) during transport and mycelium growth is maintained;
the cover (5) is designed such that when the cover (5) is open, the fruiting phase of fungus can be induced, or
the cover (5) is designed such that when the cover (5) is in the closed position, the fruiting phase of fungus can be induced; wherein the inner side (50) of the cover (5) together with the opening (30) of the pod (3) and the hole (40) of the cutting lid (4) is hermetically sealed, or
the cover (5) comprises at least one filter (55) of a material that gasses can freely move through but microorganisms cannot, or the entire cover (5) is made of a material that gasses can freely move through but microorganisms cannot.

11. The container system (1) according to claim 10, wherein the cover (5) comprises an inner side (50) and two opposite first side frames (51) extending in the first direction (X), and two opposite second side frames (52) extending in the second direction (Y), whereby
the cover (5) corresponds with the frame (21) and the first and second guide rail (24) such that the cover (5) is attached in a form-locked and/or force-locked manner on the cutting lid (4) and/or the frame (21) and/or the first and second guide rail (24).

12. The container system (1) according to one of claims 1 to 11,
comprising a first and second frame (21) and a first and second cutting lid (4) which are arranged on opposite sides of the case board (2) in the third direction (Z), whereby
the at least one pod (3) comprises two opposite openings (30) being arranged adjacent to one of the first and second cutting lid (4), whereby one of two openings (30) is provided with the rim (301).

13. The container system (1) according to claim 12, whereby
the container system (1) is adapted to be rotated about 180°, such that mushroom fruiting bodies (M) can grow through the holes (10) on both opposite sides of the case board (2), successively.

14. The container system (1) according to one of claims 1 to 13,
whereby the case board (2) and/or the pod (3) and/or the cutting lid (4) and/or the cover (5) are made of a material which can effectively be cleaned and sterilized such as an appropriate plastic and preferably thermosetting polymer and/or preferably stainless steel.

15. Use of the container system (1) according to one of claims 1 to 14 in a vertical farming system comprising a plurality of racks (6) being arranged subsequently adjacent to each other in the first (X) and second (Y) direction, whereby
a plurality of container systems (1) can be particularly operated and arranged vertically subsequently adjacent to each other in one rack (6) by machine and/or manual operation.
